# EUROPEAN PATENT SPECIFICATION

(11) **EP 3 832 479 B1**
(45) Date of publication and mention of the grant of the patent: **18.10.2023**
(21) Application number: 19936960.4
(22) Date of filing: 29.11.2019
(51) Int. Cl.: G06F 16/906

(54) **PRODUCTION LINE MONITORING METHOD AND APPARATUS, AND ELECTRONIC DEVICE AND READABLE STORAGE MEDIUM**
PRODUKTIONSLINIENÜBERWACHUNGSVERFAHREN UND -VORRICHTUNG UND ELEKTRONISCHE VORRICHTUNG UND LESBARES SPEICHERMEDIUM
PROCÉDÉ ET APPAREIL DE SURVEILLANCE DE CHAÎNE DE PRODUCTIONS, AINSI QUE DISPOSITIF ÉLECTRONIQUE ET SUPPORT D'INFORMATIONS LISIBLE

(30) Priority: 05.07.2019 CN 201910609248
(43) Date of publication of application: 09.06.2021
(73) Proprietor: Guangdong Lyric Robot Automation Co., Ltd., Huizhou Avenue, Ma'an Town, Huicheng District Huizhou City Guangdong 516001 (CN)
(72) Inventor: YAN, Guocong, Huizhou, Guangdong 516001 (CN); CHEN, Jinzhong, Huizhou, Guangdong 516001 (CN); WENG, Huanran, Huizhou, Guangdong 516001 (CN); LI, Zhida, Huizhou, Guangdong 516001 (CN); ZENG, Honghui, Huizhou, Guangdong 516001 (CN); TONG, Yulong, Huizhou, Guangdong 516001 (CN); DU, Yixian, Huizhou, Guangdong 516001 (CN)
(74) Representative: Ponti & Partners, S.L.P
(86) International application number: PCT/CN2019/121813
(87) International publication number: WO 2021/003970

(56) References cited:
- EP-A2- 1 498 025
- CN-A- 108 319 243
- CN-A- 109 358 574
- CN-A- 109 544 033
- CN-A- 110 321 352
- JP-A- 2009 176 178
- US-A1- 2005 075 841
- US-A1- 2006 288 260
- US-A1- 2009 089 359
- US-A1- 2018 374 022

## Description

### Technical Field

The present disclosure relates to the technical field of production line control, and in particular to a method and apparatus for monitoring a production line (a production line monitoring method and apparatus), an electronic device, and a readable storage medium.

### Background Art

Currently, assembly line tasks can be implemented by an automated production line in most industries. There are multiple automated production devices on a production line. Since each automated production device has different tasks, it is necessary to monitor the individual automated production devices so that a fault occurring in the production process can be effectively known. On this basis, the prior art provides a way to acquire data on individual automated production devices, but the complex data is not significantly effective in monitoring the automated production devices. US2006288260A1 discloses an apparatus for reporting, making alerts and predicting fault codes generated by machines in a line.

### Summary

The invention is defined by the features of the independent claims.

Further embodiments are the subject-matter of the dependent claims.

In view of the above, an object of embodiments of the present disclosure is to provide a method and apparatus for monitoring a production line, an electronic device, and a readable storage medium. The effect of monitoring data generated in a production line more orderly can be achieved.

In a first aspect, an embodiment of the present disclosure provides a method for monitoring a production line, including:
acquiring operating data on individual mechanical devices in a target production line;
primarily classifying the operating data according to characteristics attributed to the operating data to obtain various types of status data;
processing, for each type of status data included in the various types of status data, the status data according to a processing rule matching the status data to obtain a monitoring result.

In the method for monitoring a production line according to this embodiment, different types of data can be easily managed by classifying the collected operating data according to characteristics. Further, each type of data is further processed by using a different rule. In this way, monitoring results can be obtained for different types of data, and different types of data can be monitored differently, so that data in the production process of the production line can be effectively monitored.

The characteristics attributed to the operating data include upper-level storage addresses of the operating data. Wherein the upper-level storage addresses are addresses where the operating data are stored in a controller of the individual mechanical devices. The step of primarily classifying the operating data according to characteristics attributed to the operating data to obtain various types of status data includes:
assigning the operating data to corresponding data storage variables depending on the upper-level storage addresses of the operating data to obtain intermediate data;
classifying the intermediate data according to definitions attributed to the corresponding data storage variables to obtain various types of status data.

In the method for monitoring a production line according to this embodiment, the operating data is stored by referring to data storage variables, so that the operating data can be classified depending on definitions attributed to the data storage variables, whereby the operating data can be managed in an orderly manner.

In an optional embodiment, the method further includes:
sending a heartbeat signal to a controller of the individual mechanical devices at intervals of a first set period;
receiving a heartbeat signal fed back by the controller of the individual mechanical devices after receiving the heartbeat signal, the heartbeat signal fed back representing that the controller is connected normally, or sending a handshake request to the controller to re-establish a connection with the controller when a heartbeat signal is not received from the controller.

In the method for monitoring a production line according to this embodiment, the status of connection with the controller is checked by a heartbeat mechanism, so that situations such as delay of data transmission or loss of acquired data caused by disconnection can be reduced, and more effective data transmission can be achieved.

The step of acquiring operating data on individual mechanical devices in a target production line and the step of processing, for each type of status data included in the various types of status data, the status data according to a processing rule matching the status data to obtain a monitoring result are carried out separately by using asynchronous threads.

In the method for monitoring a production line according to this embodiment, the data acquiring step and the processing step are carried out separately by asynchronous threads, so that the processing step can be carried out without waiting for the execution of the preceding data acquiring step, whereby the data processing efficiency can be improved.

In an optional embodiment, the various types of status data include production data. The step of processing the status data according to a processing rule matching the status data to obtain a monitoring result includes:
storing production data of each of mechanical devices and a corresponding mechanical device identifier in an associated manner to obtain production data of each of the mechanical devices;
calculating production sub-data in multiple specified time periods from the production data of each of the mechanical devices;
creating a production data table from the production sub-data of each mechanical device in each specified time period.

In the method for monitoring a production line according to this embodiment, production data is stored according to time periods, so that the conditions of mechanical devices in different time periods can be easily known.

In an optional embodiment, the various types of status data include alarm data. The step of processing the status data according to a processing rule matching the status data to obtain a monitoring result includes:
identifying the alarm data with a set rule to obtain alarm display data;
outputting and displaying the alarm display data.

In the method for monitoring a production line according to this embodiment, alarm data is displayed so that a relevant operator can easily locate the point where the problem has occurred.

In an optional embodiment, the various types of state data include process data. The process data is used for representing various attributes of produced elements. The step of processing the status data according to a processing rule matching the status data to obtain a monitoring result includes:
secondarily classifying the process data according to the various attributes of the produced elements to obtain classified process data;
storing the various classified process data and corresponding produced element identifiers in an associated manner to obtain product parameters of the individual produced elements;
determining product types to which the corresponding produced elements belong according to the product parameters of the individual produced elements, the product type including non-defectiveness and defectiveness.

In the method for monitoring a production line according to this embodiment, the process data is classified again, and then product parameters of individual produced elements are determined based on the classification, so that it can be easily determined whether the individual product elements are non-defective.

In a second aspect, an embodiment of the present disclosure further provides a production line monitoring apparatus, including:
an acquiring module configured to acquire operating data on individual mechanical devices in a target production line;
a classification module configured to primarily classify the operating data according to characteristics attributed to the operating data to obtain various types of status data; and
a processing module configured to process the status data according to a processing rule matching the status data to obtain a monitoring result.

In a third aspect, an embodiment of the present disclosure further provides an electronic device, including a processor and a memory. The memory stores machine-readable instructions executable by the processor. When the electronic device is operating, the machine-readable instructions are executed by the processor to execute the steps of the method in the first aspect or in any possible embodiment of the first aspect.

In a fourth aspect, an embodiment of the present disclosure further provides a computer-readable storage medium. A computer program is stored on the readable storage medium. The computer program executes the steps of the method in the first aspect or in any possible embodiment of the first aspect when the computer program is run by a processor.

In order to enable clearer and easier understanding of the above objects, features, and advantages of the present disclosure, preferred embodiments will be described in detail below by way of example with reference to the accompanying drawings.

### Brief Description of the Drawings

In order to more clearly illustrate technical solutions of embodiments of the present disclosure, drawings required for use in the embodiments will be described briefly below. It is to be understood that the drawings below are merely illustrative of some embodiments of the present disclosure, and therefore should not be considered as limiting its scope. It will be understood by those of ordinary skill in the art that other relevant drawings can also be obtained from these drawings without any inventive effort.
FIG. 1 is a schematic diagram of a production line monitor according to an embodiment of the present disclosure.
FIG. 2 is a schematic block diagram of an electronic device according to an embodiment of the present disclosure.
FIG. 3 is a flowchart of a method for monitoring a production line according to an embodiment of the present disclosure.
FIG. 4 is a schematic diagram showing functional modules of a production line monitoring apparatus according to an embodiment of the present disclosure.

### Detailed Description of the Embodiments

The technical solutions of the embodiments of the present disclosure will be described below with reference to the accompanying drawings of the embodiments of the present disclosure.

It should be noted that similar reference numerals and letters refer to similar items in the following figures, and thus once an item is defined in one figure, it may not be further defined or explained in the following figures. Moreover, in the description of the present disclosure, the terms such as "first" and "second" are used for distinguishing the description only, and should not be understood as an indication or implication of relative importance.

### First Embodiment:

In order to facilitate the understanding of this embodiment, an electronic device that executes a method for monitoring a production line disclosed in an embodiment of the present disclosure and a production line monitoring system where the electronic device is located are first described in detail.

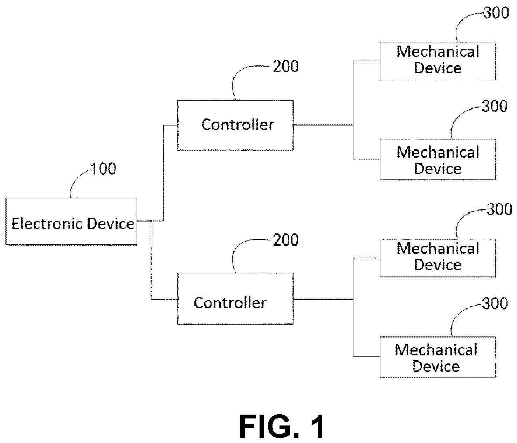

FIG. 1 shows a schematic diagram of a production line monitoring system according to an embodiment of the present disclosure. The production line monitoring system may include an electronic device 100, a controller 200, and a mechanical device 300. Here, the electronic device 100 is communicatively connected to one or more controllers 200 (two controllers are shown in the figure) via a network. Each controller 200 is communicatively connected to one or more mechanical devices 300 (two mechanical devices are shown in the figure).

Here, the above-mentioned electronic device 100 may be a network server, a database server, or the like, or may be a personal computer (PC), a tablet computer, a smart phone, a personal digital assistant (PDA), or the like.

Optionally, an application program may be installed in the above-mentioned electronic device 100. The application program is configured to acquire operating data from the controller 200 and process the data. Optionally, the above-mentioned application program may also be connected to a database for storing data acquired by the application program or data processed by the application program.

Optionally, the above-mentioned controller 200 may be a PLC (Programmable Logic Controller). Exemplarily, one controller 200 may be connected to all the mechanical devices 300 on the production line to control the operation of all the mechanical devices 300 on the production line. Exemplarily, one controller 200 may be connected to only one mechanical device 300 to control the operation of the mechanical device 300. Exemplarily, two or more controllers 200 may be configured on a production line, and each controller 200 is connected to a specified number of mechanical devices 300 to control the operation of the corresponding specified number of mechanical devices 300.

Exemplarily, after operating data on the mechanical device(s) is prepared, the controller 200 may output a flag bit to notify the electronic device 100 that the data can be collected.

The above-mentioned mechanical devices 300 may vary depending on different produced elements. For example, when the produced element is a battery, the mechanical devices 300 may include a welding device, a sealing device, a packaging device, and so on, which are not exhaustively listed here.

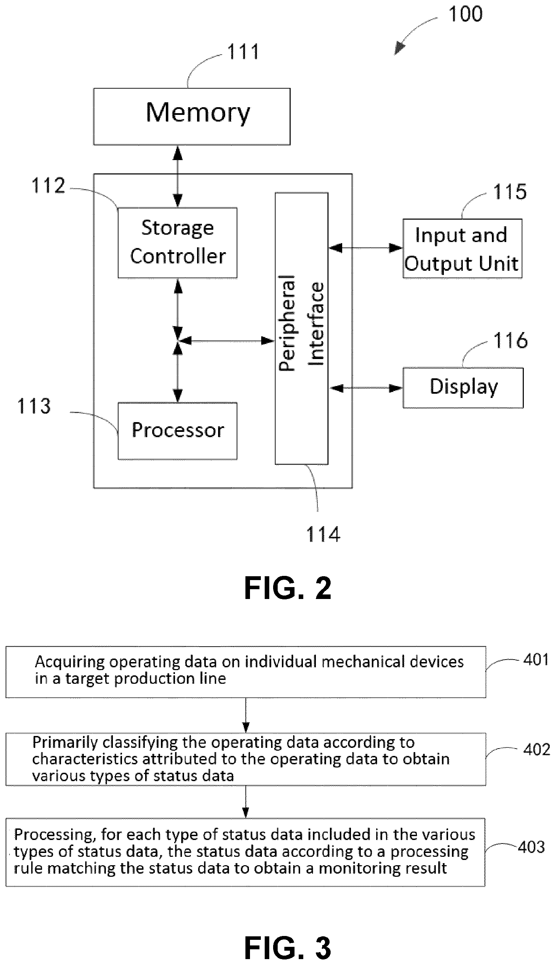

FIG. 2 shows a schematic block diagram of an electronic device. The electronic device 100 may include a memory 111, a storage controller 112, a processor 113, a peripheral interface 114, an input and output unit 115, and a display unit 116. It can be understood by those of ordinary skill in the art that the structure shown in FIG. 2 is merely illustrative and is not intended to limit the structure of the electronic device 100. For example, the electronic device 100 may include more or fewer components than those shown in FIG. 2 or have a different configuration from that shown in FIG. 2.

The above-mentioned elements, including the memory 111, the storage controller 112, the processor 113, the peripheral interface 114, the input and output unit 115, and the display unit 116, are directly or indirectly electrically connected to one another to implement data transmission or interaction. For example, these elements may be electrically connected to one another via one or more communication buses or signal lines. The above-mentioned processor 113 is configured to execute an executable module stored in the memory.

Here, the memory 111 may be, but is not limited to, a random access memory (referred simply to as RAM), a read only memory (referred simply to as ROM), a programmable read-only memory (referred simply to as PROM), an erasable programmable read-only memory (referred simply to as EPROM), an electric erasable programmable read-only memory (referred simply to as EEPROM), or the like. Here, the memory 111 is configured to store an executable computer program. The processor 113 executes the computer program after receiving an execution instruction. A method executed by the electronic device 100 defined by a process disclosed in any of the embodiments of the present disclosure may be used in the processor 113 or implemented by the processor 113.

The above-mentioned processor 113 may be an integrated circuit chip with signal processing capability. The above-mentioned processor 113 may be a general-purpose processor, including a central processing unit (referred simply to as CPU), a network processor (referred simply to as NP), or the like, or may be a digital signal processor (referred simply to as DSP), an application specific integrated circuit (referred simply to as ASIC), a field programmable gate array (FPGA) or any other programmable logic device, discrete gate or transistor logic device, or discrete hardware component. The methods, steps, and logical block diagrams disclosed in the embodiments of the present disclosure may be implemented or executed. The general-purpose processor may be a microprocessor, or the processor may be any conventional processor or the like.

The above-mentioned peripheral interface 114 couples various input/output devices to the processor 113 and to the memory 111. In some embodiments, the peripheral interface 114, the processor 113, and the storage controller 112 may be implemented in a single chip. In some other examples, they may be implemented by independent chips, respectively.

The above-mentioned input and output unit 115 is configured to allow the user to input data. The input and output unit 115 may be, but is not limited to, a mouse, a keyboard, and the like.

The above-mentioned display unit 116 provides an interactive interface (e.g., a user operation interface) between the electronic device 100 and the user or is configured to display image data for the user's reference. In this embodiment, the display unit may be a liquid crystal display or a touch display. If it is a touch display, it may be a capacitive touch screen or a resistive touch screen that supports single-point and multi-point touch operations. Supporting single-point and multi-point touch operations means that a touch display can sense a touch operation generated from one position or simultaneously from multiple positions on the touch display, and the sensed touch operation is calculated and processed by the processor.

The electronic device 100 in this embodiment may be configured to execute the steps of each method according to an embodiment of the present disclosure. A process of implementing a method for monitoring a production line will be described in detail below by means of several embodiments.

### Second Embodiment:

FIG. 3 illustrates a flowchart of a method for monitoring a production line according to an embodiment of the present disclosure. The specific procedures shown in FIG. 3 will be described in detail below.

In step 401, operating data on individual mechanical devices in a target production line is acquired.

Optionally, the method for monitoring a production line in the embodiment of the present disclosure can be used in the electronic device shown in FIG. 2. Exemplarily, the electronic device is connected to a controller of the individual mechanical devices on the production line.

Optionally, a data acquiring instruction may be sent to a controller of the individual mechanical devices in the target production line at intervals of a second set period to read the operating data on the individual mechanical devices from the controller.

Optionally, the above-mentioned second set period may be set by the user as required in the production line. Optionally, the second set period may be 50 ms, 100 ms, 200 ms, or the like. Relatively real-time data can be maintained by periodically acquiring the operating data, so that the above monitoring result is relatively more able to indicate the current status of the production line.

Optionally, before step 401, a connection request may be sent to the controller of the mechanical devices to achieve a connection with the controller. Exemplarily, the operating data on the mechanical devices may be stored in the controller.

Optionally, the method for monitoring a production line in this embodiment further includes: sending a heartbeat signal to the controller of the individual mechanical devices at intervals of a first set period.

In one case, after the controller of the individual mechanical devices successfully receives the heartbeat signal, the controller of the individual mechanical devices may feed back a heartbeat signal to the electronic device connected thereto in order to indicate that it is online. After the electronic device receives the heartbeat signal fed back by the controller of the individual mechanical devices after receiving the heartbeat signal, the electronic device may determine that the controller is normally connected.

In another case, when a heartbeat signal is not received from the controller, a handshake request is sent to the controller to re-establish a connection with the controller.

The above-mentioned first set period may also be set as required. Optionally, the above-mentioned first set period may be shorter than the above-mentioned second set period, so that the controller is in the normally connected state at a time node when the data is acquired. Optionally, the first set period may be one half of the second set period, or the first set period may be one third of the second set period, for example.

In other implementations, the electronic device may continuously send a heartbeat signal to the controller of the individual mechanical devices. After the controller of the individual mechanical devices receives the heartbeat signal, the controller may feed a heartbeat signal back to the electronic device that sends the heartbeat signal, thereby notifying the electronic device that it is normally connected.

In the method for monitoring a production line according to this embodiment, the status of connection with the controller is checked by a heartbeat mechanism, so that situations such as delay of data transmission or loss of acquired data caused by disconnection can be reduced, and more effective data transmission can be achieved.

In step 402, the operating data is primarily classified according to characteristics attributed to the operating data to obtain various types of status data.

Optionally, the above-mentioned status data includes: process data, production data, alarm data, and so on.

In an embodiment, the controller connected to the electronic device acquires various data on a mechanical device and then stores the data in respective designated addresses according to the categories of the data. In one example, storage space with storage address 1-100 is used for storing process data, storage space with storage address 101-200 is used for storing production data, and storage space with storage address 201-300 is used for storing alarm data.

The characteristics attributed to the operating data include upper-level storage addresses of the operating data. The above-mentioned upper-level storage address indicates an address where data is stored in the controller. The step 402 may include: assigning the operating data to corresponding data storage variables depending on the upper-level storage addresses of the operating data to obtain intermediate data; classifying the intermediate data according to definitions attributed to the corresponding data storage variables to obtain various types of status data.

The above-mentioned data storage variables may be variables of any type such as an integer type, a floating-point type, a Boolean type, or a character type. When a data storage variable is being defined, a data storage address may be allocated to the data storage variable. When other data is assigned to the defined data storage variable, the corresponding other data is stored in the storage space corresponding to the storage address matching the data storage variable.

In another embodiment, operating data acquired from the controller may carry data identifiers, and the operating data may be classified according to types identified by the data identifiers.

In the method for monitoring a production line according to this embodiment, the operating data is stored by referring to data storage variables, so that the operating data can be classified depending on definitions attributed to the data storage variables, whereby the operating data can be managed in an orderly manner.

Considering that the received data may be data of different data types required by the electronic device, optionally, the operating data may be parsed before being classified, so that the parsed data is data usable by the electronic device.

In one example, the controller of the mechanical devices may transmit the operating data in the form of hexadecimal data because hexadecimal data occupies less space and is transmitted relatively faster. Therefore, when the data acquired from the controller of the mechanical devices is hexadecimal data, the electronic device may first parse the hexadecimal data into binary data.

In another example, the controller of the mechanical devices may transmit the operating data in the form of encrypted data in order to increase the security of data transmission. Therefore, when the data acquired from the controller of the mechanical devices is encrypted data, the encrypted data may be decrypted first.

In step 403, for each type of status data included in the various types of status data, the status data is processed according to a processing rule matching the status data to obtain a monitoring result.

In an embodiment, the step 401 and step 403 may be carried out separately by using asynchronous threads. For example, when data collected in a first time period is being processed, an asynchronous thread may be activated to acquire data in a second time period. In this way, data in the second time period can be collected without completely processing the data collected in the first time period, whereby the data collection or processing efficiency can be improved.

In one embodiment, the various types of status data include production data. The production data may be data representing the performance of mechanical devices. For example, the production data may include data such as production volumes, production capacity, and failure rates of individual devices.

The step 403 may include: storing production data of each of mechanical devices and a corresponding mechanical device identifier in an associated manner to obtain production data of each of the mechanical devices, calculating production sub-data in multiple specified time periods from the production data of each of the mechanical devices, and creating a production data table from the production sub-data of each mechanical device in each specified time period.

Optionally, the above-mentioned production data table may be stored in a database connected to the electronic device.

The length of each specified time period may be divided depending on the density of tasks in the production line. Optionally, each specified time length may be one hour or two hours, for example.

Optionally, the currently determined production data may indicate the total number of current shifts. Optionally, a day may be divided into two shifts, three shifts, or four shifts, for example. Below statistics is performed with one hour taken as an example. A day may be divided into two shifts, where the first shift is from 8:00 to 20:00, and the second shift is from 20:00 to 8:00. For example, if the current production capacity is A at the current time of 12:00 and a production capacity of B is collected at the time of 11:00, then the production capacity A-B between 11:00 and 12:00 can be determined from A and B. In this way, the production capacity per hour can be determined.

Here, for the production capacity and failure rate in the above-mentioned production data, the production capacity and failure rate in each time period may also be determined in accordance with the above-mentioned production capacity calculation method.

Optionally, variables may be defined respectively for storing the production volume, the production capacity, and the failure rate of each mechanical device mentioned above.

Optionally, it may also be determined based on the above-mentioned production data table whether the failure rate of each mechanical device exceeds a threshold. If it exceeds the threshold, a prompt message may be output to notify a relevant operator to repair and maintain the mechanical device, for example.

The conditions of mechanical devices in different time periods can be easily known by storing the production data according to time periods.

In an optional embodiment, the various types of status data include alarm data. The alarm data may include data indicating whether the individual mechanical devices are operating normally, for example.

The step 403 may include: identifying the alarm data with a set rule to obtain alarm display data, and outputting and displaying the alarm display data.

In an embodiment, the above-mentioned alarm data may be binary data. Each 0 or 1 respectively indicates whether one device or one produced element is normal. In an example, 1 indicates that a device or one produced element is abnormal, and 0 indicates that a device or one produced element is normal.

Optionally, if sixteen monitoring points are included in one production line, the alarm data may be expressed by using sixteen-bit binary data. Optionally, if twenty monitoring points are included in one production line, the alarm data may be expressed by using twenty-bit binary data.

The above-mentioned set rule may allow the binary value 0 to be converted to FALSE as a Boolean value and allow the binary value 1 to be converted to TRUE. In an example, 1 in the binary data corresponds to TRUE in a Boolean array, and 0 corresponds to FALSE in the Boolean array. A piece of alarm display data is generated corresponding to TRUE in the Boolean array.

It can be quickly determined, by the above conversion of values, whether a corresponding mechanical device or produced element is abnormal. The abnormal information is output as an alarm to notify a relevant operator to perform maintenance or abnormality-blocking operations.

In another embodiment, the above-mentioned alarm data may be temperature data. The above-mentioned set rule may allow the temperature data to be compared with an abnormal temperature range. When a piece of temperature data acquired from the controller of the mechanical devices is within the abnormal range, a piece of alarm display data is generated.

In the method for monitoring a production line according to this embodiment, the alarm data is display so that so that a relevant operator can easily locate the point where the problem has occurred.

In an optional embodiment, the various types of status data include process data. The process data is used for representing various attributes of produced elements. In an example, the produced element may be a battery, thus the corresponding process data may include the length, width, and height of the battery, the resistance value of the battery, the voltage value of the battery, and so on, which are not exhaustively listed here.

The step 403 may include: secondarily classifying the process data according to the various attributes of the produced elements to obtain classified process data; storing the various classified process data and corresponding produced element identifiers in an associated manner to obtain product parameters of the individual produced elements; determining product types to which the corresponding produced elements belong according to the product parameters of the individual produced elements, the product type including non-defectiveness and defectiveness.

Optionally, the above-mentioned step of secondarily classifying the process data according to the various attributes of the produced elements to obtain classified process data may include: defining attribute variables according to the individual attributes of the product elements; assigning data on the attributes of the individual products included in the individual process data to the corresponding attribute variables; classifying the individual process data based on the definitions of the dividual attribute variables to obtain classified process data.

For example, in the case where the product element is a battery, variables may be defined respectively for attributes of the battery such as the length, width, and height of the battery, the resistance value of the battery, and the voltage value of the battery. Each variable is used for storing an attribute of the battery.

Optionally, each process data may also correspond to an identification code. The identification code may be an identifier of a produced element corresponding to the process data.

Optionally, a product element report may be created from the product parameters of the individual produced elements.

Optionally, if any product element is inspected to be defective, the product parameters of this product may be output and displayed.

In the method for monitoring a production line according to this embodiment, the process data is classified again, and then product parameters of individual produced elements are determined based on the classification, so that it can be easily determined whether the individual product elements are non-defective.

In the method for monitoring a production line according to this embodiment, different types of data can be easily managed by classifying the collected operating data according to characteristics. Further, each type of data is further processed by using a different rule. In this way, monitoring results can be obtained for different types of data, and different types of data can be monitored differently, so that data in the production process of the production line can be effectively monitored.

### Third Embodiment:

Based on the same inventive concept, an embodiment of the present disclosure further provides a production line monitoring apparatus corresponding to the method for monitoring a production line. The apparatus in the embodiment of the present disclosure solves the problems based on similar principles to those in the method for monitoring a production line in the foregoing embodiment of the present disclosure, therefore the apparatus may be implemented with reference to the implementation of the method, and a repeated description will be omitted here.

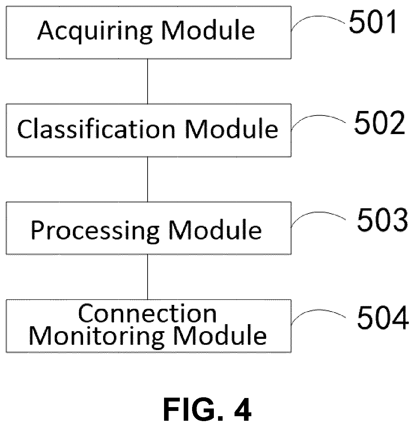

FIG. 4 illustrates a schematic diagram showing functional modules of a production line monitoring apparatus according to an embodiment of the present disclosure. The individual modules in the production line monitoring apparatus in this embodiment are configured to execute the individual steps in the foregoing method embodiment. The production line monitoring apparatus includes an acquiring module 501, a classification module 502, and a processing module 503.

The acquiring module 501 is configured to acquire operating data on individual mechanical devices in a target production line.

The classification module 502 is configured to primarily classify the operating data according to characteristics attributed to the operating data to obtain various types of status data.

The processing module 503 is configured to process the status data according to a processing rule matching the status data to obtain a monitoring result.

The characteristics attributed to the operating data include upper-level storage addresses of the operating data. The classification module 502 is further configured to:
assign the operating data to corresponding data storage variables depending on the upper-level storage addresses of the operating data to obtain intermediate data;
classify the intermediate data according to definitions attributed to the corresponding data storage variables to obtain various types of status data.

In a possible embodiment, the acquiring module 501 is further configured to:
send a data acquiring instruction to a controller of the individual mechanical devices in the target production line at intervals of a data set period to read the operating data on the individual mechanical devices from the controller.

In a possible embodiment, the production line monitoring apparatus further includes a connection monitoring module 504 configured to:
send a heartbeat signal to a controller of the individual mechanical devices at intervals of a first set period;
receive a heartbeat signal fed back by the controller of the individual mechanical devices after receiving the heartbeat signal, the heartbeat signal fed back representing that the controller is connected normally, or send a handshake request to the controller to re-establish a connection with the controller when a heartbeat signal is not received from the controller.

In a possible embodiment, the acquiring module 501 and the processing module 503 described above are executed separately by using asynchronous threads.

In a possible embodiment, the various types of status data include production data. The above-mentioned processing module 503 is further configured to:
store production data of each of mechanical devices and a corresponding mechanical device identifier in an associated manner to obtain production data of each of the mechanical devices;
calculate production sub-data in multiple specified time periods from the production data of each of the mechanical devices;
create a production data table from the production sub-data of each mechanical device in each specified time period.

In a possible embodiment, the various types of status data include alarm data. The above-mentioned processing module 503 is further configured to:
identify the alarm data with a set rule to obtain alarm display data;
output and display the alarm display data.

In a possible embodiment, the various types of state data include process data. The above-mentioned processing module 503 is further configured to:
secondarily classify the process data according to various attributes of produced elements to obtain classified process data;
store the various classified process data and corresponding produced element identifiers in an associated manner to obtain product parameters of the individual produced elements;
determine product types to which the corresponding produced elements belong according to the product parameters of the individual produced elements, the product type including non-defectiveness and defectiveness.

In addition, an embodiment of the present disclosure further provides a computer-readable storage medium. A computer program is stored on the computer-readable storage medium. The computer program executes the steps of the method for monitoring a production line described in the foregoing method embodiment when the computer program is run by a processor.

An embodiment of the present disclosure provides a computer program product for a method for monitoring a production line, which includes a computer-readable storage medium storing program code. The program code includes instructions that can be configured to execute the steps of the method for monitoring a production line described in the foregoing method embodiment. Reference may be made to the foregoing method embodiment for details, which will not be described in detail here.

In several embodiments according to the present disclosure, it should be understood that the disclosed apparatus and method may also be implemented in other ways. The embodiments of the apparatus described above are merely illustrative in nature. For example, the flow charts and block diagrams in the figures illustrate implementable architectures, functionalities, and operations of apparatuses, methods, and computer program products according to multiple embodiments of the present disclosure. In this regard, each block in the flow charts or block diagrams may represent a module, a program segment, or a portion of code, wherein the module, the program segment, or the portion of code includes one or more executable instructions for implementing specified logical function(s). It should also be noted that in some alternative implementations, the functions noted in the blocks may occur out of the order noted in the figures. For example, two blocks shown in succession may in fact be executed substantially concurrently, or they may sometimes be executed in a reverse order, depending upon the functionality involved. It will also be noted that each block of the block diagrams and/or flow charts, and combinations of blocks in the block diagrams and/or flow charts, may be implemented by special purpose hardware-based systems that execute the specified functions or actions, or by a combination of special purpose hardware and computer instructions.

Besides, the individual functional modules in the embodiments of the present disclosure may be integrated together to form an independent part, or each of the modules may be physically stand-alone, or two or more of the modules may be integrated into an independent part.

When implemented in the form of a software functional module and sold or used as an independent product, the functions may be stored in a computer-readable storage medium. Based on such understanding, a technical solution of the present disclosure essentially, or the part thereof contributing to the prior art, or a part of the technical solution may be embodied in the form of a software product. The computer software product is stored in a storage medium, and includes a number of instructions for causing a computer device (which may be a personal computer, a server, a network device, or the like) to execute all or some of the steps of the methods described in the various embodiments of the present disclosure. The preceding storage medium includes any medium that can store program codes, such as a USB flash disk, a mobile hard disk, a read-only memory (ROM), a random access memory (RAM), a magnetic disk, or an optical disk. It should be noted that in this text, relationship terms such as first, second, and the like are used only for distinguishing one entity or operation from another entity or operation, while it is not necessarily required or implied that these entities or operations have any such practical relationship or order. Furthermore, the terms "comprise", "include", or any variations thereof are intended to cover non-exclusive inclusions, such that a process, method, article, or apparatus that comprises a list of elements not only comprises those elements, but also comprises other elements not expressly listed or also comprises elements inherent to such process, method, article, or apparatus. Without more restrictions, an element defined with the wording "comprising a..." does not exclude the presence of additional identical elements in the process, method, article, or apparatus comprising said element.

The above description is merely illustrative of preferred embodiments of the present disclosure and is not intended to limit the present disclosure. It will be understood by those skilled in the art that various modifications and variations may be made to the present disclosure. It should be noted that similar reference numerals and letters refer to similar items in the following figures, and thus once an item is defined in one figure, it may not be further defined or explained in the following figures.

Therefore, the scope of protection of the present disclosure should be determined by the scope of protection of the claims.

## Claims

1. A method for monitoring a production line, comprising:
(401) acquiring operating data on individual mechanical devices (300) in a target production line;
(402) primarily classifying the operating data according to characteristics attributed to the operating data to obtain various types of status data; and
(403) processing, for each type of status data included in the various types of status data, the status data according to a processing rule matching the status data to obtain a monitoring result;
wherein the method is **characterized in that:**
- characteristics attributed to the operating data include upper-level storage addresses of the operating data, wherein the upper-level storage addresses are addresses where the operating data are stored in a controller (200) of the individual mechanical devices (300); and
- the step of primarily classifying the operating data according to characteristics attributed to the operating data to obtain various types of status data comprises:
- assigning the operating data to corresponding data storage variables depending on the upper-level storage addresses of the operating data, to obtain intermediate data;
- classifying the intermediate data according to definitions attributed to the corresponding data storage variables to obtain various types of status data:
wherein the step (401) of acquiring operating data on individual mechanical devices (300) in a target production line, and the step (403) of processing for each type of status data included in the various types of status data, the status data according to a processing rule matching the status data to obtain a monitoring result, are carried out separately by using asynchronous threads.

2. The method according to claim 1, further comprising:
sending a heartbeat signal to the controller (200) of the individual mechanical devices (300) at intervals of a first set period; and
receiving a heartbeat signal, which is fed back by the controller (200) of the individual mechanical devices (300) after receiving the heartbeat signal, the heartbeat signal fed back representing that the controller (200) is connected normally, or sending a handshake request to the controller (200) to re-establish a connection with the controller (200) when a heartbeat signal is not received from the controller (200).

3. The method according to claim 1 or 2, wherein the various types of status data include production data, and the step of processing the status data according to a processing rule matching the status data to obtain a monitoring result comprises:
storing production data of each of mechanical devices (300) and a corresponding mechanical device identifier in an associated manner to obtain production data of each of the mechanical devices (300);
calculating production sub-data in multiple specified time periods from the production data of each of the mechanical devices (300); and
creating a production data table from the production sub-data of each mechanical device (300) in each specified time period.

4. The method according to claim 1 or 2, wherein the various types of status data include alarm data, and the step of processing the status data according to a processing rule matching the status data to obtain a monitoring result comprises:
identifying the alarm data with a set rule to obtain alarm display data; and
outputting and displaying the alarm display data.

5. The method according to claim 1 or 2, wherein the various types of state data include process data, the process data is used for representing various attributes of produced elements, and the step of processing the status data according to a processing rule matching the status data to obtain a monitoring result comprises:
secondarily classifying the process data according to the various attributes of the produced elements to obtain classified process data;
storing the various classified process data and corresponding produced element identifiers in an associated manner to obtain product parameters of the individual produced elements; and
determining product types to which the corresponding produced elements belong according to the product parameters of the individual produced elements, the product type including non-defectiveness and defectiveness.

6. An electronic device (100), **characterized by** comprising: a processor (113) and a memory (111), with machine-readable instructions executable by the processor (113) stored in the memory (111), wherein when the electronic device (100) is operating, and the machine-readable instructions are executed by the processor (113) to execute the steps of the method according to any one of claims 1 to 5.

## Patentansprüche

1. Verfahren zum Überwachen einer Produktionslinie, umfassend:
(401) Erfassen von Betriebsdaten über einzelne mechanische Vorrichtungen (300) in einer Ziel-Produktionslinie;
(402) primäres Klassifizieren der Betriebsdaten gemäß Charakteristika, die den Betriebsdaten zugeschrieben werden, um verschiedene Typen von Statusdaten zu erhalten; und
(403) Verarbeiten, für jeden Typ von Statusdaten, die in den verschiedenen Typen von Statusdaten enthalten sind, der Statusdaten gemäß einer Verarbeitungsregel, die an die Statusdaten angepasst ist, um ein Überwachungsergebnis zu erhalten;
wobei das Verfahren **dadurch gekennzeichnet ist, dass:**
- Charakteristika, die den Betriebsdaten zugeschrieben werden, Speicheradressen höherer Ebene der Betriebsdaten enthalten, wobei die Speicheradressen höherer Ebene Adressen sind, an denen die Betriebsdaten in einer Steuereinheit (200) der einzelnen mechanischen Vorrichtungen (300) gespeichert sind, und
- der Schritt des primären Klassifizierens der Betriebsdaten gemäß Charakteristika, die den Betriebsdaten zugeschrieben werden, um verschiedene Typen von Statusdaten zu erhalten, umfasst:
- Zuweisen der Betriebsdaten zu entsprechenden Datenspeichervariablen in Abhängigkeit von den Speicheradressen höherer Ebene der Betriebsdaten, um Zwischendaten zu erhalten;
- Klassifizieren der Zwischendaten gemäß Definitionen, die den entsprechenden Datenspeichervariablen zugeschrieben werden, um verschiedene Typen von Statusdaten zu erhalten,
wobei der Schritt (401) des Erfassens von Betriebsdaten über einzelne mechanische Vorrichtungen (300) in einer Ziel-Produktionslinie und der Schritt (403) des Verarbeitens, für jeden Typ von Statusdaten, die in den verschiedenen Typen von Statusdaten enthalten sind, der Statusdaten gemäß einer Verarbeitungsregel, die an die Statusdaten angepasst ist, um ein Überwachungsergebnis zu erhalten, unter Verwendung asynchroner Threads getrennt ausgeführt werden.

2. Verfahren Anspruch 1, ferner umfassend:
Senden eines Heartbeat-Signals zu der Steuereinheit (200) der einzelnen mechanischen Vorrichtungen (300) in Intervallen einer ersten festgelegten Dauer; und
Empfangen eines Heartbeat-Signals, das durch die Steuereinheit (200) der einzelnen mechanischen Vorrichtungen (300) nach Empfang des Heartbeat-Signals zurückgemeldet wird, wobei das zurückgemeldete Heartbeat-Signal angibt, dass die Steuereinheit (200) normal verbunden ist, oder Senden einer Handshake-Anforderung zu der Steuereinheit (200), um eine Verbindung mit der Steuereinheit (200) erneut aufzubauen, wenn ein Heartbeat-Signal von der Steuereinheit (200) nicht empfangen wird.

3. Verfahren nach Anspruch 1 oder 2, wobei die verschiedenen Typen von Statusdaten Produktionsdaten enthalten und der Schritt des Verarbeitens der Statusdaten gemäß einer Verarbeitungsregel, die an die Statusdaten angepasst ist, um ein Überwachungsergebnis zu erhalten, umfasst:
Speichern von Produktionsdaten jeder der mechanischen Vorrichtungen (300) und einer entsprechenden Kennung der jeweiligen mechanischen Vorrichtung in einer zugeordneten Weise, um Produktionsdaten jeder der mechanischen Vorrichtungen (300) zu erhalten;
Berechnen von Produktionsunterdaten in mehreren spezifizierten Zeitdauern aus den Produktionsdaten jeder der mechanischen Vorrichtungen (300); und
Erzeugen einer Produktionsdatentabelle aus den Produktionsunterdaten jeder mechanischen Vorrichtung (300) in jeder spezifizierten Zeitdauer.

4. Verfahren nach Anspruch 1 oder 2, wobei die verschiedenen Typen von Statusdaten Alarmdaten enthalten und der Schritt des Verarbeitens der Statusdaten gemäß einer Verarbeitungsregel, die an die Statusdaten angepasst ist, um ein Überwachungsergebnis zu erhalten, umfasst:
Identifizieren der Alarmdaten mit einer festgelegten Regel, um Alarmanzeigedaten zu erhalten; und
Ausgeben und Anzeigen der Alarmanzeigedaten.

5. Verfahren nach Anspruch 1 oder 2, wobei die verschiedenen Typen von Statusdaten Prozessdaten enthalten, wobei die Prozessdaten verwendet werden, um verschiedene Attribute produzierter Elemente darzustellen, und wobei der Schritt des Verarbeitens der Statusdaten gemäß einer Verarbeitungsregel, die an die Statusdaten angepasst ist, um ein Überwachungsergebnis zu erhalten, umfasst:
sekundäres Klassifizieren der Prozessdaten gemäß den verschiedenen Attributen der produzierten Elemente, um klassifizierte Prozessdaten zu erhalten;
Speichern der verschiedenen klassifizierten Prozessdaten und entsprechender Kennungen von produzierten Elementen in einer zugeordneten Weise, um Produktparameter der einzelnen produzierten Elemente zu erhalten; und
Bestimmen von Produkttypen, zu denen die entsprechenden produzierten Elemente gehören, gemäß den Produktparametern der einzelnen produzierten Elemente, wobei der Produkttyp Nicht-Fehlerhaftigkeit und Fehlerhaftigkeit enthält.

6. Elektronische Vorrichtung (100), **gekennzeichnet durch**: einen Prozessor (113) und einen Speicher (111) mit maschinenlesbaren Anweisungen, die durch den Prozessor (113) ausführbar sind, die in dem Speicher (111) gespeichert sind, wobei dann, wenn die elektronische Vorrichtung (100) arbeitet, die maschinenlesbaren Anweisungen durch den Prozessor (113) ausgeführt werden, um die Schritte des Verfahrens nach einem der Ansprüche 1 bis 5 auszuführen.

## Revendications

1. Procédé de surveillance d'une chaîne de production, comprenant :
(401) l'acquisition de données de fonctionnement sur des dispositifs mécaniques individuels (300) dans une ligne de production cible ;
(402) le classement principalement des données de fonctionnement en fonction de caractéristiques attribuées aux données de fonctionnement afin d'obtenir différents types de données d'état ; et
(403) le traitement, pour chaque type de données d'état incluses dans les différents types de données d'état, des données d'état selon une règle de traitement correspondant aux données d'état afin d'obtenir un résultat de surveillance ;
dans lequel le procédé est **caractérisé en ce que :**
- les caractéristiques attribuées aux données de fonctionnement incluent des adresses de stockage de niveau supérieur des données de fonctionnement, dans lequel les adresses de stockage de niveau supérieur sont des adresses où les données de fonctionnement sont stockées dans un contrôleur (200) des dispositifs mécaniques individuels (300) ; et
- l'étape consistant à classer principalement les données de fonctionnement en fonction des caractéristiques attribuées aux données de fonctionnement afin d'obtenir différents types de données d'état comprend :
- l'affectation des données de fonctionnement aux variables de stockage de données correspondantes en fonction des adresses de stockage de niveau supérieur des données de fonctionnement, afin d'obtenir des données intermédiaires ;
- le classement des données intermédiaires en fonction des définitions attribuées aux variables de stockage de données correspondantes afin d'obtenir différents types de données d'état :
dans lequel l'étape (401) d'acquisition de données de fonctionnement sur des dispositifs mécaniques individuels (300) dans une ligne de production cible, et l'étape (403) de traitement pour chaque type de données d'état incluses dans les différents types de données d'état, les données d'état selon une règle de traitement correspondant aux données d'état pour obtenir un résultat de surveillance, sont effectuées séparément en utilisant des fils asynchrones.

2. Procédé selon la revendication 1, comprenant en outre :
l'envoi d'un signal de battement de coeur au contrôleur (200) des dispositifs mécaniques individuels (300) à des intervalles d'une première période définie ; et
la réception d'un signal de battement de coeur, qui est renvoyé par le contrôleur (200) des dispositifs mécaniques individuels (300) après réception du signal de battement de coeur, le signal de battement de coeur renvoyé indiquant que le contrôleur (200) est connecté normalement, ou l'envoi d'une demande de poignée de main au contrôleur (200) pour rétablir une connexion avec le contrôleur (200) lorsqu'un signal de battement de coeur n'est pas reçu du contrôleur (200).

3. Procédé selon la revendication 1 ou 2, dans lequel les différents types de données d'état incluent des données de production, et l'étape de traitement des données d'état selon une règle de traitement correspondant aux données d'état pour obtenir un résultat de surveillance comprend :
le stockage de données de production de chacun des dispositifs mécaniques (300) et d'un identifiant de dispositif mécanique correspondant d'une manière associée pour obtenir des données de production de chacun des dispositifs mécaniques (300) ;
le calcul de sous-données de production au cours de plusieurs périodes spécifiées à partir des données de production de chacun des dispositifs mécaniques (300) ; et
la création d'un tableau de données de production à partir des sous-données de production de chaque dispositif mécanique (300) pour chaque période spécifiée.

4. Procédé selon la revendication 1 ou 2, dans lequel les différents types de données d'état incluent des données d'alarme, et l'étape de traitement des données d'état selon une règle de traitement correspondant aux données d'état pour obtenir un résultat de surveillance comprend :
l'identification des données d'alarme avec une règle définie pour obtenir des données d'affichage d'alarme ; et
l'émission et l'affichage des données d'alarme.

5. Procédé selon la revendication 1 ou 2, dans lequel les différents types de données d'état incluent des données de traitement, les données de traitement sont utilisées pour représenter divers attributs d'éléments produits, et l'étape de traitement des données d'état selon une règle de traitement correspondant aux données d'état pour obtenir un résultat de surveillance comprend :
le classement dans un deuxième temps des données de traitement en fonction des divers attributs des éléments produits afin d'obtenir des données de traitement classées ;
le stockage des diverses données de traitement classées et des identifiants d'éléments produits correspondants de manière associée afin d'obtenir des paramètres de produit des éléments produits individuels ; et
la détermination de types de produits auxquels appartiennent les éléments produits correspondants en fonction des paramètres de produit des éléments produits individuels, le type de produit incluant la non-défectuosité et la défectuosité.

6. Dispositif électronique (100), **caractérisé en ce qu'**il comprend : un processeur (113) et une mémoire (111), avec des instructions lisibles par une machine exécutables par le processeur (113) stockées dans la mémoire (111), dans lequel, lorsque le dispositif électronique (100) fonctionne, les instructions lisibles par la machine sont exécutées par le processeur (113) pour exécuter les étapes du procédé selon l'une quelconque des revendications 1 à 5.
